# EUROPÄISCHE PATENTSCHRIFT

(11) **EP 1 890 025 B1**
(45) Veröffentlichungstag und Bekanntmachung des Hinweises auf die Patenterteilung: **10.09.2014**
(21) Anmeldenummer: 07013869.8
(22) Anmeldetag: 16.07.2007
(51) Int. Cl.: B60W 30/184

(54) **Verfahren und Vorrichtung zum Begrenzen des von einer Brennkraftmaschine abgegebenen Drehmoments**
Method and device for limiting the output torque of an internal combustion engine
Procédé et dispositif destinés à limiter le couple émis d'un moteur à combustion interne

(30) Priorität: 12.08.2006 DE 102006037840
(43) Veröffentlichungstag der Anmeldung: 20.02.2008
(73) Patentinhaber: Schaeffler Technologies GmbH & Co. KG, 91074 Herzogenaurach (DE)
(72) Erfinder: Jones, Stephen John, Dr., 76227 Karlsruhe (DE); Juraschek, Jens, 76532 Baden-Baden (DE)

(56) Entgegenhaltungen:
- EP-A2- 1 260 693
- DE-A1- 10 035 521
- DE-A1- 19 833 839
- US-A1- 2002 183 163
- US-B1- 6 440 038

## Beschreibung

Die Erfindung betrifft ein Verfahren mit den Merkmalen gemäß dem Oberbegriff des Anspruchs 1 und eine Vorrichtung mit den Merkmalen gemäß dem Oberbegriff des Anspruchs 3.

Bei elektronischen Motorsteuersystemen ist es bekannt, ein maximal zulässiges Motormoment von der Motordrehzahl und der Getriebeübersetzung abhängig zu machen, um das Getriebe oder andere Komponenten des Antriebsstrangs vor Beschädigungen zu schützen und den Fahrkomfort nicht zu beeinträchtigen. Die Motordrehzahl wird dabei von einem Drehzahlsensor ermittelt, dessen Ausgangssignal zur Glättung gefiltert wird, so dass zur Bestimmung des maximal zulässigen Motormoments eine gefilterte oder bezogen auf eine zurückliegende Zeitdauer jeweils durchschnittliche Motordrehzahl herangezogen wird.

Dokument US 6 440 038 B1 zeigt ein Verfahren zum Begrenzen des von einer Brennkraftmaschine eines Antriebsstrangs abgegebenen Drehmoments in Abhängigkeit von der Drehzahl der Brennkraftmaschine und der Übersetzung eines der Brennkraftmaschine nachgeschalteten Getriebes.

Aus dem japanischen Patentabstrakt, Veröffentlichungsnummer: 2005069206 A bzw. der japanischen Patentanmeldung 2003303996 ist bekannt, in einem Antriebsstrang, bei dem eine Brennkraftmaschine drehfest mit einem Zweimassenschwungrad verbunden ist, die Kraftstoffzufuhr zu unterbrechen, wenn im Zweimassenschwungrad das Auftreten einer Resonanz wahrscheinlich ist.

Insbesondere bei niedrigen Drehzahlen der Brennkraftmaschine kann in einem Antriebsstrang, bei dem die Brennkraftmaschine mit einem Zweimassenschwungrad versehen ist, sowohl der Antriebsstrang an sich als auch das Zweimassenschwungrad ein Resonanzverhalten zeigen, wodurch es dazu kommen kann, dass während eines Arbeitstaktes der Brennkraftmaschine ein negatives Motormoment auftritt. Unter solchen Bedingungen ist die Qualität sowohl des gefilterten Motordrehzahlsignals schlecht, wodurch eine präzise die motordrehzahlabhängige und übersetzungsabhängige Beschränkung des maximal zulässigen Motormoments nur schwer möglich ist, was zu einer Gefährdung des Antriebsstrangs führen kann.

Der Erfindung liegt die Aufgabe zugrunde, Komponenten des Antriebsstrangs durch Beschränkung des maximal zulässigen Motormoments wirksam zu schützen.

Diese Aufgabe Wird durch ein Verfahren mit den Merkmalen gemäß Anspruch 1 sowie eine Vorrichtung mit den Merkmalen gemäß Anspruch 3 gelöst.

Erfindungsgemäß ist zum Begrenzen des von einer Brennkraftmaschine eines Antriebsstrangs abgegebenen Drehmoments in Abhängigkeit von der Drehzahl der Brennkraftmaschine und der Übersetzung eines der Brennkraftmaschine nachgeschalteten Getriebes vorgesehen, dass die Drehzahl aus Betriebsparametern des Antriebsstranges hergeleitet wird, von denen wenigstens einer verschieden von der augenblicklich gemessenen Drehzahl der Brennkraftmaschine ist.

Dadurch, dass erfindungsgemäß die Drehzahl der Brennkraftmaschine indirekt ermittelt wird, ist das Drehzahlsignal, das zusammen mit der Übersetzung das maximal zulässige Drehmoment bestimmt, frei von den hohen Fluktuationen und Unsicherheiten, die in bestimmten Betriebszuständen auftreten.

Dabei wird die Drehzahl aus wenigstens einer gemessenen Raddrehzahl und der zwischen dem Rad und der Brennkraftmaschine wirksamen Übersetzung hergeleitet.

Die wirksame Übersetzung wird dabei aus der Getriebeübersetzung und einem den Schlupf einer in dem Antriebsstrang enthaltenen Kupplung beschreibenden Parameter hergeleitet.

Bei einer vorteilhaften Durchführungsform des erfindungsgemäßen Verfahrens wird die Drehzahl aus einem mathematischen Modell des Antriebsstranges hergeleitet, in das Ausgangssignale entsprechender Sensoren als jeweilige Variable eingehen.

Eine Vorrichtung zum Begrenzen des von einer Brennkraftmaschine eines Antriebsstrangs abgegebenen Drehmoments in Abhängigkeit von der Drehzahl der Brennkraftmaschine und der Übersetzung eines der Brennkraftmaschine nachgeschalteten Getriebes, enthält ein Leistungsstellglied zum Einstellen des von der Brennkraftmaschine abgegebenen Drehmoments, einen Aktor zum Betätigen des Leistungsstellgliedes, eine Einrichtung zum Ermitteln der Übersetzung des Getriebes, eine Einrichtung zum Ermitteln der Drehzahl der Brennkraftmaschine und eine elektronische Steuereinrichtung, in der ein Kennfeld abgelegt ist, das ein von der Drehzahl der Brennkraftmaschine und der Getriebeübersetzung abhängiges maximal zulässiges Drehmoment angibt, wobei die Steuereinrichtung den Aktor derart steuert, dass die Brennkraftmaschine das maximal zulässige Drehmoment abgibt, und zur Ermittlung der Drehzahl der Brennkraftmaschine wenigstens ein von einem Drehzahlsensor zur direkten Erfassung der Drehzahl der Brennkraftmaschine verschiedener Sensor vorgesehen ist und die Steuereinrichtung das maximale Drehmoment entsprechend einem Verfahren nach einem der vorgenannten Verfahren steuert.

Der wenigstens eine Sensor kann ein Sensor zur Erfassung der Drehzahl eines drehfest mit der Ausgangswelle des Getriebes verbundenen Bauteils sein.

Die elektronische Steuereinrichtung kann ein mathematisches Modell des Antriebsstrangs enthalten und steuert das maximale Drehmoment, indem die Drehzahl der Brennkraftmaschine aus dem mathematischen Modell des Antriebsstrangs hergeleitet wird, in das Ausgangssignale entsprechender Sensoren als jeweilige Variable eingehen.

Bei einer vorteilhaften Weiterbildung der erfindungsgemäßen Vorrichtung enthält der Antriebsstrang ein Zweimassenschwungrad.

Die Erfindung eignet sich für alle Antriebsstränge, bei denen das von einer Brennkraftmaschine abgegeben Moment in Abhängigkeit von der Drehzahl der Brennkraftmaschine und der zwischen der Brennkraftmaschine und einer Ausgangswelle eines der Brennkraftmaschinen nachgeschalteten Getriebes wirksamen Übersetzung auf einen Maximalwert begrenzt werden soll. Besonders gut eignet sich die Erfindung zur Anwendung für einen Fahrzeugantriebsstrang, bei dem das Schwungrad der Brennkraftmaschine als Zweimassenschwungrad ausgebildet ist.

Die Erfindung wird im Folgenden anhand schematischer Zeichnungen beispielsweise und mit weiteren Einzelheiten erläutert.

In den Figuren stellen dar:
- Fig. 1: ein Kennfeld, das das maximale Drehmoment abhängig von der Motordrehzahl und einer jeweiligen Übersetzung zeigt,
- Fig. 2: ein vereinfachtes Blockschaltbild einer erfindungsgemäßen Steuereinrichtung.

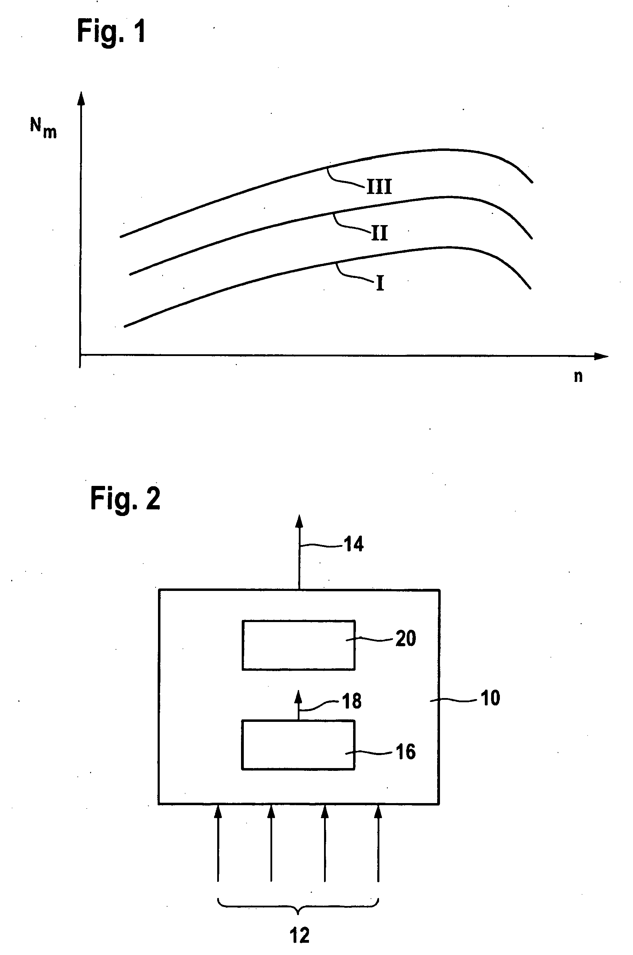

In Fig. 1 geben drei Kurven I, II und III beispielhaft das maximale Motormoment Nₘ abhängig von der Drehzahl des Motors n an wobei die Kurve ! das maximale zulässige Motormoment angibt, wenn in einem der Brennkraftmaschine eines Fahrzeugantriebsstrangs nachgeschalteten Getriebe der erste Gangs eingelegt ist. Die Kurven II und III geben das maximale Motormoment jeweils bei eingelegtem zweiten bzw. dritten Gang an.

Ein Problem, das sich in der Praxis stellt, liegt darin, dass für das maximal zulässige Drehmoment Nₘ nicht eine augenblickliche Motordrehzahl relevant ist, die großen Schwankungen unterworfen ist, sondern eine effektive gemittelte Motordrehzahl.

Diese effektive gemittelte Motordrehzahl kann dadurch ermittelt werden, dass die Drehzahl eines angetriebenen Rades des Fahrzeugs bzw. der Ausgangswelle des Getriebes von einem Sensor erfasst wird und unter Berücksichtigung der Übersetzung eines Differentials und Getriebeübersetzung - bei einem Stufengetriebe die des eingelegten Gangs oder bei einem Getriebe mit stufenlos veränderbaren Übersetzung die augenblickliche Übersetzung des Getriebes in die Drehzahl der Getriebeeingangswelle umgerechnet wird. Unter der Voraussetzung einer nicht schlupfenden Kupplung kann auf diese Weise die Motordrehzahl bestimmt werden.

Für eine weitere Verfeinerung der Bestimmung der Motordrehzahl n wird nicht nur die Drehzahl der Getriebeausgangswelle bzw. eines angetriebenen Fahrzeugrades ermittelt, dessen Drehzahl über die Übersetzung des Differenzials in die Drehzahl der Getriebeausgangswelle umgerechnet werden kann, sowie die Übersetzung des Getriebes, die bei einem Gangschaltgetriebe durch Sensieren des eingelegten Gangs oder bei einem Getriebe mit stufenloser Übersetzung aus dem Steuergerät des stufenlosen Getriebes oder durch direkte Messung des Verhältnisses der Drehzahl von dessen Eingangswelle zur Drehzahl der Ausgangswelle ermittelt wird, sondern es muss auch noch der Schlupf einer Kupplung bzw. eines Wandlers berücksichtigt werden, der aus der Ansteuerung der Kupplung oder des Getriebes mit stufenlos veränderbarer Übersetzung bekannt ist.

Fig. 2 zeigt ein vereinfachtes Blockschaltbild einer erfindungsgemäß vorgesehenen Steuereinrichtung, mit der ein maximales Motormoment Nₘ begrenzt werden kann.

Die elektronische Steuereinrichtung 10, die in an sich bekannter Weise einen Mikroprozessor mit zugehörigem Programm- und Datenspeicher enthält, weist Eingänge 12 und einen Ausgang 14 auf.

Die Eingänge 10 sind mit Sensoren, beispielsweise einem Sensor zur Ermittlung der Drehzahl eines angetriebenen Fahrzeugrades oder der Drehzahl einer Getriebeausgangswelle, einem Sensor zur Ermittlung der Stellung eines Aktors einer nicht dargestellten Kupplung, einem Sensor zur Erfassung der Stellung eines Laststellgliedes der Brennkraftmaschine sowie gegebenenfalls weiteren Sensoren verbunden. In der Steuereinrichtung 10 ist ein Fahrzeugmodul 16 gespeichert, das gestattet, in Abhängigkeit von den über die Eingänge 12 zugeführten Signalen ein Ausgangssignal 18 zu errechnen, das aktuell der jeweiligen gemittelten Drehzahl n des Motors entspricht. Das Fahrzeugmodul kann ein Schlupfkennfeld der Kupplung, ein Kennfeld, das das Verhalten eines in einem Antriebsstrang enthaltenen Zweimassenschwungrads beschreibt, und weitere Details enthalten, die eine möglichst genaue Berechnung einer jeweiligen gemittelten Motordrehzahl gestatten. Im einfachsten Fall rechnet das Fahrzeugmodul 16 aus der gemessenen Drehzahl eines angetriebenen Fahrzeugrades, der Übersetzung eines Differenzials und eines Getriebes nach Überprüfung, ob eine Kupplung voll geschlossen ist, die Motordrehzahl n aus.

Das in Fig. 1 dargestellte Kennfeld ist in Fig. 2 mit 20 bezeichnet. Einem Speicher, in dem das Kennfeld der Fig. 1 gespeichert ist (bei Getrieben mit stufenlos veränderbarer Übersetzung ein kontinuierliches Kennfeld), werden die berechnete Motordrehzahl 18 und die Getriebeübersetzung zugeführt, so dass am Ausgang 14 ein aus dem Kennfeld 20 ermitteltes Signal verfügbar ist, entsprechend dem ein Laststellglied der Brennkraftmaschine derart gesteuert wird, dass ein maximal zulässiges Motormoment nicht überschritten wird.

Da das Motormoment aus der Stellung des Laststellgliedes (beispielsweise Drosselklappe bei einem Ottomotor, Einspritzmengensteller bei einem Dieselmotor) und der Drehzahl der Brennkraftmaschine ermittelt werden kann, die Drehzahl bekannt ist, kann das maximal zulässige Motormoment lediglich anhand der Stellung des Laststellgliedes, das von einem Aktor betätigt wird, bestimmt werden.

### Bezugszeichenliste

- 10: elektronische Steuereinrichtung
- 12: Eingänge
- 14: Ausgang
- 10: Fahrzeugmodell
- 20: Kennfeld

## Patentansprüche

1. Verfahren zum Begrenzen des von einer Brennkraftmaschine eines Antriebsstrangs abgegebenen Drehmoments in Abhängigkeit von einer Drehzahl der Brennkraftmaschine und der Übersetzung eines der Brennkraftmaschine nachgeschalteten Getriebes, wobei die Drehzahl aus Betriebsparametern des Antriebsstranges hergeleitet wird, von denen wenigstens einer verschieden von der augenblicklich gemessenen Drehzahl der Brennkraftmaschine ist, **dadurch gekennzeichnet, dass** die Drehzahl aus wenigstens einer gemessenen Raddrehzahl und einer zwischen dem Rad und der Brennkraftmaschine wirksamen Übersetzung hergeleitet wird und wobei die wirksame Übersetzung aus der Getriebeübersetzung und einem den Schlupf einer im Antriebsstrang enthaltenen Kupplung beschreibenden Parameter hergeleitet wird.

2. Verfahren nach Anspruch 1, **dadurch gekennzeichnet, dass** die Drehzahl aus einem mathematischen Modell (16) des Antriebsstranges hergeleitet wird, in das Ausgangssignale entsprechender Sensoren als jeweilige Variable eingehen.

3. Vorrichtung zum Begrenzen des von einer Brennkraftmaschine eines Antriebsstrangs abgegebenen Drehmoments in Abhängigkeit von der Drehzahl der Brennkraftmaschine und der Übersetzung eines der Brennkraftmaschine nachgeschalteten Getriebes, enthaltend
ein Leistungsstellglied zum Einstellen des von der Brennkraftmaschine abgegebenen Drehmoments,
einen Aktor zum Betätigen des Leistungsstellgliedes,
eine Einrichtung zum Ermitteln der Übersetzung des Getriebes,
eine Einrichtung zum Ermitteln der Drehzahl der Brennkraftmaschine und
eine elektronische Steuereinrichtung (10), in der ein Kennfeld (20) abgelegt ist, das ein von der Drehzahl der Brennkraftmaschine und der Getriebeübersetzung abhängiges maximal zulässiges Drehmoment (I, II, III) angibt, wobei die Steuereinrichtung (10) den Aktor derart steuert, dass die Brennkraftmaschine das maximal zulässige Drehmoment (I, II, III) abgibt, **dadurch gekennzeichnet, dass** zur Ermittlung der Drehzahl der Brennkraftmaschine wenigstens ein von einem Drehzahlsensor zur direkten Erfassung der Drehzahl der Brennkraftmaschine verschiedener Sensor vorgesehen ist und die Steuereinrichtung (10) das maximale Drehmoment (I, II, III) entsprechend dem Verfahren nach Anspruch 1 steuert.

4. Vorrichtung nach Anspruch 3, **dadurch gekennzeichnet, dass** der wenigstens eine Sensor ein Sensor zur Erfassung der Drehzahl eines drehfest mit der Ausgangswelle des Getriebes verbundenen Bauteils ist.

5. Vorrichtung nach Anspruch 3 oder 4, **dadurch gekennzeichnet, dass** die elektronische Steuereinrichtung (10) ein mathematisches Modell (16) des Antriebsstrangs enthält und das maximale Drehmoment (I, II, III) entsprechend dem Verfahren nach Anspruch 2 steuert.

6. Vorrichtung nach einem der Ansprüche 3 bis 5, **dadurch gekennzeichnet, dass** der Antriebsstrang ein Zweimassenschwungrad enthält.

## Claims

1. Method for limiting the torque that is output by an internal combustion engine of a drivetrain as a function of a rotational speed of the internal combustion engine and the transmission ratio of a gearbox that is connected downstream of the internal combustion engine, wherein the rotational speed is derived from operating parameters of the drivetrain, at least one of which differs from the presently measured rotational speed of the internal combustion engine, **characterized in that** the rotational speed is derived from at least one measured wheel rotational speed and an effective transmission ratio between the wheel and the internal combustion engine, and wherein the effective transmission ratio is derived from the gearbox transmission ratio and a parameter that describes the slip of a clutch that is incorporated in the drivetrain.

2. Method according to Claim 1, **characterized in that** the rotational speed is derived from a mathematical model (16) of the drivetrain, wherein output signals from corresponding sensors are input as respective variables into said mathematical model.

3. Device for limiting the torque that is output by an internal combustion engine of a drivetrain as a function of the rotational speed of the internal combustion engine and the transmission ratio of a gearbox that is connected downstream of the internal combustion engine, comprising a power controller for adjusting the torque that is output by the internal combustion engine,
an actuator for actuating the power controller,
a device for determining the transmission ratio of the gearbox,
a device for determining the rotational speed of the internal combustion engine and
an electronic control device (10) in which there is stored a characteristic map (20) which specifies a maximum admissible torque (I, II, III) as a function of the rotational speed of the internal combustion engine and the gearbox transmission ratio, wherein the control device (10) controls the actuator such that the internal combustion engine outputs the maximum admissible torque (I, II, III), **characterized in that**, for the determination of the rotational speed of the internal combustion engine, at least one sensor is provided that differs from a rotational speed sensor for the direct detection of the rotational speed of the internal combustion engine, and the control device (10) controls the maximum torque (I, II, III) in accordance with the method according to Claim 1.

4. Device according to Claim 3, **characterized in that** the at least one sensor is a sensor for detecting the rotational speed of a component that is connected rotationally conjointly to the output shaft of the gearbox.

5. Device according to Claim 3 or 4, **characterized in that** the electronic control device (10) comprises a mathematical model (16) of the drivetrain and controls the maximum torque (I, II, III) in accordance with the method according to Claim 2.

6. Device according to one of Claims 3 to 5, **characterized in that** the drivetrain comprises a dual-mass flywheel.

## Revendications

1. Procédé destiné à limiter le couple de rotation émis par un moteur à combustion interne de chaîne cinématique en fonction d'une vitesse de rotation du moteur à combustion interne et de la démultiplication d'une boîte de vitesses connectée en aval du moteur à combustion interne, la vitesse de rotation étant déduite des paramètres de fonctionnement de la chaîne cinématique dont au moins un diffère d'une vitesse de rotation du moteur à combustion interne mesurée à cet instant, **caractérisé en ce que** la vitesse de rotation est déduite d'au moins une vitesse de rotation de roue mesurée et d'une démultiplication active entre la roue et le moteur à combustion interne et la démultiplication active étant déduite de la démultiplication de boîte de vitesses et d'un paramètre décrivant le patinage d'un embrayage contenu dans la chaîne cinématique.

2. Procédé selon la revendication 1, **caractérisé en ce que** la vitesse de rotation est déduite d'un modèle mathématique (16) de la chaîne cinématique dans lequel les signaux de sortie des capteurs correspondants servent de variable respective.

3. Dispositif destiné à limiter le couple de rotation émis par un moteur à combustion interne de chaîne cinématique en fonction de la vitesse de rotation du moteur à combustion interne et de la démultiplication d'une boîte de vitesses connectée en aval du moteur à combustion interne, contenant :
un élément de réglage de puissance servant à régler le couple de rotation émis par le moteur à combustion interne ;
un actionneur servant à actionner l'élément de réglage de puissance ;
un dispositif de calcul de la démultiplication de la boîte de vitesses ;
un dispositif de calcul de la vitesse de rotation du moteur à combustion interne ; et
un dispositif de commande électronique (10) dans lequel une caractéristique (20) est mémorisée, ladite caractéristique donnant un couple de rotation (I, II, III) maximal autorisé en fonction de la vitesse de rotation du moteur à combustion interne et de la démultiplication de boîte de vitesses, le dispositif de commande (10) commandant l'actionneur de telle sorte que le moteur à combustion interne transmet le couple de rotation (I, II, III) maximal autorisé, **caractérisé en ce que** pour calculer la vitesse de rotation du moteur à combustion interne, au moins un capteur différent d'un capteur de vitesse de rotation est prévu pour la détection directe de la vitesse de rotation du moteur à combustion interne et que le dispositif de commande (10) commande le couple de rotation (I, II, III) maximal en fonction du procédé selon la revendication 1.

4. Dispositif selon la revendication 3, **caractérisé en ce que** l'au moins un capteur est un capteur de détection de la vitesse de rotation d'un composant relié solidairement en rotation à l'arbre de sortie de la boîte de vitesses.

5. Dispositif selon la revendication 3 ou 4, **caractérisé en ce que** le dispositif de commande électronique (10) contient un modèle mathématique (16) de la chaîne cinématique et commande le couple de rotation (I, II, III) maximal en fonction du procédé selon la revendication 2.

6. Dispositif selon l'une quelconque des revendications 3 à 5, **caractérisé en ce que** la chaîne cinématique contient un volant à deux masses.
